(19) Europäisches Patentamt
European Patent Office
Office européen des brevets

(11) EP 0 555 773 B1

(12) **EUROPEAN PATENT SPECIFICATION**

(45) Date of publication and mention
of the grant of the patent:
**21.05.1997 Bulletin 1997/21**

(51) Int Cl.6: **H02M 7/48**, B60L 11/18

(21) Application number: **93101749.5**

(22) Date of filing: **04.02.1993**

(54) **Inverter for electric vehicle**

Wechselrichter für Elektrofahrzeug

Onduleur pour véhicule électrique

(84) Designated Contracting States:
**CH DE FR GB IT LI NL SE**

(30) Priority: **07.02.1992 JP 56660/92**
 **27.04.1992 JP 154066/92**

(43) Date of publication of application:
**18.08.1993 Bulletin 1993/33**

(73) Proprietor: **FUJI ELECTRIC CO., LTD.**
**Kawasaki-shi Kanagawa 210 (JP)**

(72) Inventors:
 • **Kinoshita, Shigenori, c/o Fuji Electric Co., Ltd.**
 **Kawasaki-shi, Kanagawa (JP)**
 • **Yanase, Takao, c/o Fuji Electric Co., Ltd.**
 **Kawasaki-shi, Kanagawa (JP)**
 • **Fujita, Kouetsu, c/o Fuji Electric Co., Ltd.**
 **Kawasaki-shi, Kanagawa (JP)**

(74) Representative: **Blumbach, Kramer & Partner**
 **Patentanwälte**
 **Radeckestrasse 43**
 **81245 München (DE)**

(56) References cited:
 • **FOURTH INT. CONF. ON ELECTRONICS AND VARIABLE-SPEED DRIVES, 17 July 1990, London GB, pp. 98-103; J.K. STEINKE : 'PWM control of a three-level inverter'**
 • **IEEE TRANSACTIONS ON INDUSTRY APPLICATIONS vol. 1A-17, no. 5, September 1981, New York US, pp. 518-521; A. NABAE et al.: 'A new neutral-point-clamped PWM inverter'**
 • **PROCEEDINGS OF THE 30TH ANNUAL CONFERENCE OF THE IEEE VEHICULAR TECHNOLOGY SOCIETY, September 1980, Dearborn, MI, US, pp. 1-7; S. GEPPERT : 'AC propulsion system for an electric vehicle'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a power train for an electric vehicle, including an inverter which converts a DC voltage from a battery to an AC voltage supplied to AC motors for driving wheels of the electric vehicle.

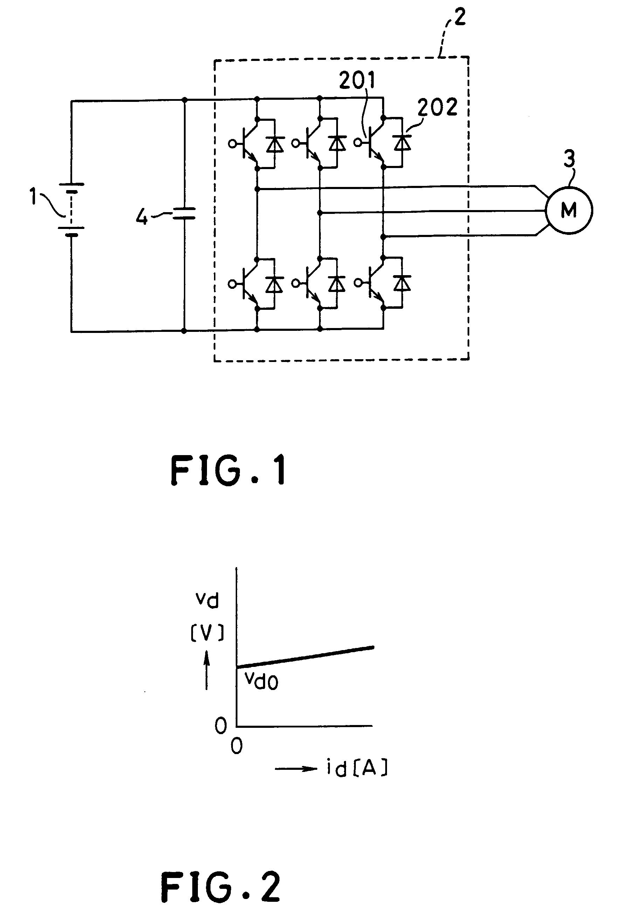

Fig. 1 shows the main circuit of an electric vehicle. The electric vehicle employs a battery as a power supply and an inverter as a DC-to-AC converter, and its wheels are driven by AC motors which are supplied with AC power from the inverter. In this figure, reference numeral 1 designates a main battery; 2, an inverter; and 3, an AC motor for driving a wheel or wheels. The inverter 2 is a three-phase inverter, and comprises six arms, each of which includes a transistor 201 and a diode 202 connected in antiparallel fashion as shown in this figure.

A smoothing capacitor 4 is connected in parallel with the battery 1 between the battery 1 and the inverter 2. The smoothing capacitor 4 prevents higher harmonics, which are included in the input current to the inverter 2, from entering the main battery 1. In addition, it limits overvoltages induced by the switching operations of the semiconductor switches of the inverter 2.

The power train of a conventional electric vehicle usually employs a bipolar transistor as the transistors 201 of the inverter 2, and an induction motor as the motor 3. This is because they will simplify the structure, reduce the cost, and facilitate employing the conventional technology.

One of the important evaluation items of the electric vehicle is the system efficiency. It corresponds to the fuel cost of an internal combustion engine car. This system efficiency has great influence on the mileage (range) between charging.

In the electric vehicle, as in the gasoline car, the output of the motor at a constant speed traveling is small as about a fraction of the maximum output. In addition, the duration of the constant speed drive is long. Accordingly, the system efficiency of the electric vehicle can be increased greatly by improving the efficiency in the low output operation mode. The components in the main circuit that govern the system efficiency are the motor and inverter. In view of this, the efficiency of the inverter will be considered below.

A large part of the loss produced by the inverter is the loss in the power semiconductor switching devices constituting the inverter. This loss is the sum of the stationary loss $P_{sd}$ and the switching loss $P_{sw}$. The stationary loss $P_{sd}$ is produced by the current flowing through the power semiconductor switching devices and is expressed by equation (1).

$$P_{sd} = i \times v_d \text{ (W)} \qquad (1)$$

where i is the current flowing through the power switching devices, and $v_d$ is the on-state voltage across the power switching devices, which is determined by the characteristics inherent in the power switching devices. The power switching devices conventionally used are bipolar transistors whose characteristics are schematically illustrated in Fig. 2. More specifically, this type of power switching device has a voltage $v_{d0}$ at the current of zero, and the on state voltage $v_d$ gradually increases with the current.

Next, the switching loss will be explained.

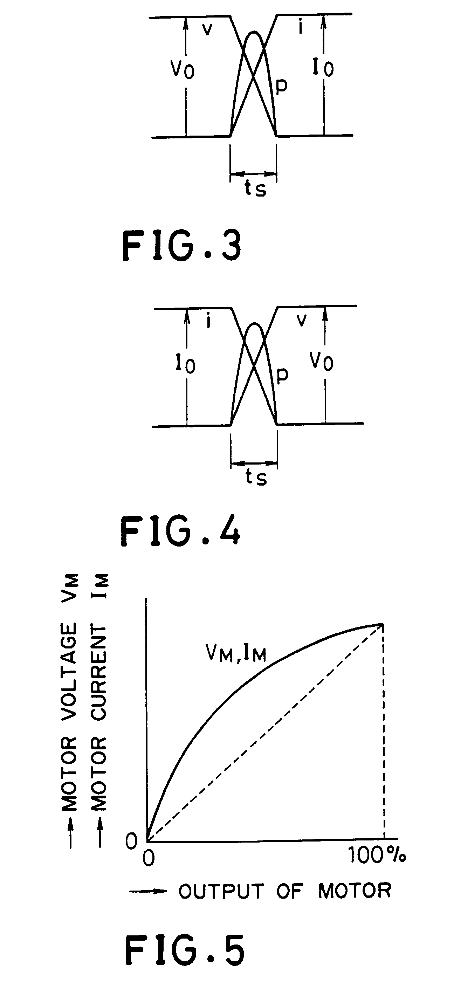

Figs. 3 and 4 show typical switching operations of the power semiconductor switching devices of the inverter: Fig. 3 illustrates the switch on operation; and Fig. 4 illustrates the switch off operation. In these figures, v is a voltage across a power switching device, i is a current flowing through the power switching device, and p designates a waveform of the power loss in the power switching device.

Here, the switching loss $P_{sw}$ is expressed by the following expression.

$$P_{sw} = V_0 \times I_0 \times t_s \times f_s / 6 \text{ (W)} \qquad (2)$$

where $t_s$ is a switching time, and $f_s$ is a switching frequency. Equation (2) holds true for both switch on and off operations.

Next, the inverter loss in the conventional system is considered.

From equation (1), it is seen that the stationary loss is approximately proportional to the current flowing through the power semiconductor switching device. This shows that the stationary loss of the inverter is proportional to the output current of the inverter, that is, to the input current to the motor. From equation (2), it is found that the switching loss is proportional to the main battery voltage and the input current to the motor because $V_0$ is nearly equal to the main battery voltage and $f_s$ is approximately constant.

As the motors for driving the electric vehicle, induction motors are commonly employed. In the induction motor, the exciting current must be supplied from the motor current.

Fig. 5 shows an example of conventional high efficiency control of an induction motor, and illustrates the relationships between the output of the motor and the voltage $V_M$ and current $I_M$ of the motor. This graph shows a method wherein the power factor of the motor are maintained approximately constant throughout the operation range of the motor.

However, since the exciting current is also required in the low output operation mode even in this method, the motor current $I_M$ is not proportional to the output (a proportional line is indicated by a dotted line). As a result, the efficiency of the motor reduces as the output of the motor decreases because the inverter loss is approximately proportional to the output current. In other words, the reduction in the efficiency might be prevented if the motor current had the characteristics as shown by the dotted line.

Next, let us consider the power train of an electric vehicle to which the inverter in accordance with the present invention is applied.

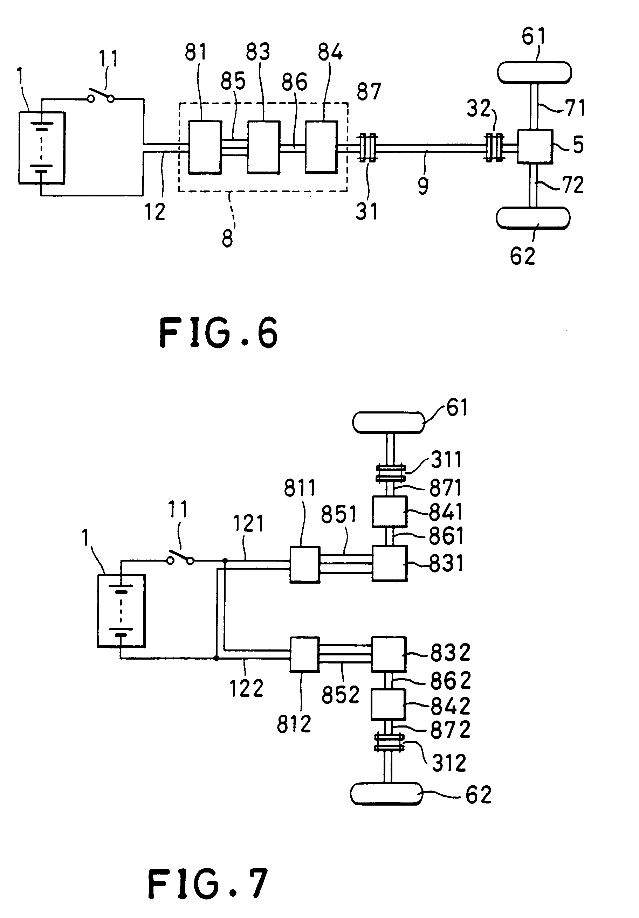

Fig. 6 is a conventional power train of an electric vehicle. The system employs a main battery, a semiconductor power converter like an inverter, and a motor in place of an engine and a transmission of an internal combustion engine car, and is one of the most widely used power train.

In this figure, reference numeral 1 designates a battery, a block 8 enclosed by dotted lines is a drive portion of the electric vehicle corresponding to the engine and transmission of an internal combustion engine car. The drive portion 8 comprises a semiconductor power converter 81 such as an inverter, a motor 83 such as a three-phase induction motor, and a reduction gear 84. The reduction gear may have either a constant or a variable reduction gear ratio.

The power converter 81 is connected, on the one hand, to the main battery 1 via DC connecting wires 12 and a main switch, and on the other hand, to the motor 83 via AC connecting wires 85.

The motor 83 is joined to the reduction gear 84 with a shaft 86, which might be replaced by the output shaft of the motor. The output shaft 87 of the reduction gear 84 transmits the output power to a differential gear 5 via universal joints 31 and 32 and a propeller shaft 9. The differential gear 5, which is similar to that of an internal combustion engine car, transmits the power from the drive portion 8 to right and left wheels 61 and 62 via a known differential mechanism and driving axles 71 and 72.

Fig. 7 shows another conventional power train. The power train in Fig. 7 differs from that of Fig. 6 in that it does not comprise the differential gear.

In Fig. 7, the power train of the right wheel 61 comprises DC connecting wires 121, a power converter 811, AC connecting wires 851, a motor 831, a coupling shaft 861, a reduction gear 841, the output shaft 871 of the reduction gear, a universal joint 311 and the right wheel 61. This system corresponds to that of Fig. 6 comprising the DC connecting wires 12, the power converter 81, the AC connecting wires 85, the motor 83, the shaft 86, the reduction gear 84, the output shaft 87 of the reduction gear, and the universal joint 31.

Likewise, the power train of the left wheel 62 of Fig. 7 comprises DC connecting wires 122, a power converter 812, AC connecting wires 852, a motor 832, a coupling shaft 862, a reduction gear 842, the output shaft 872 of the reduction gear, a universal joint 312 and the left wheel 61.

In Fig. 7, a function corresponding to that of the differential mechanism of the differential gear 5 in Fig. 6 is implemented by separately controlling the torque and the rotation rate of the respective motors 831 and 832.

Fig. 8 illustrates a power train which directly drives the wheels without interposing reduction gears.

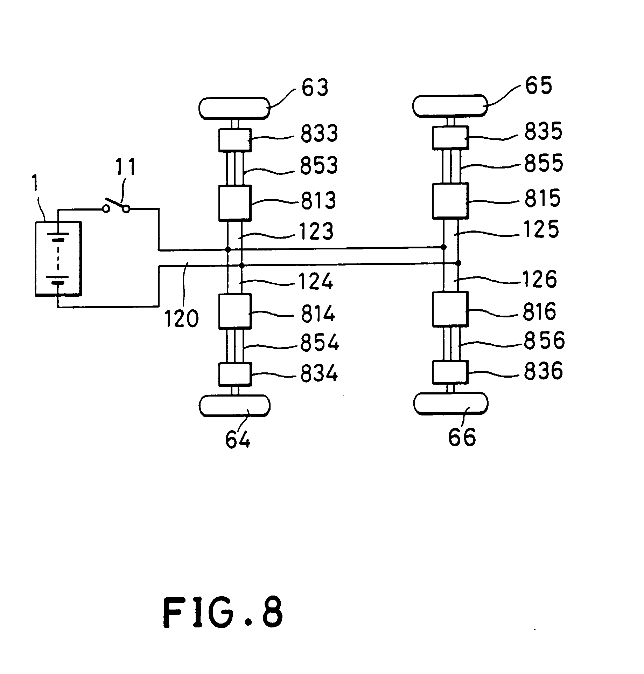

In Fig. 8, the power train for the front right wheel 63 comprises DC wires 123, a power converter 813, AC connecting wires 853, a motor 833, and the front right wheel 63. Here, the motor 833 is usually installed in the rim of the wheel 63. Power trains of the front left wheel, rear right wheel, and rear left wheel are similarly arranged. In Fig. 8, reference numerals 124, 125 and 126 denote DC connecting wires; 814, 815 and 816, power converters; 854, 855 and 856, AC connecting wires; and 834, 835 and 836, motors.

The power train shown in Fig. 6 has such a construction as the engine of an internal combustion engine car is replaced with the inverter and the motor. Therefore, it does not constitute an optimum power train for an electric vehicle, although traveling performance except for a mileage may be better than an internal combustion engine car.

As a result, it is difficult to achieve a power train (1) of small size and light weight, (2) of low cost, (3) of low noise, and (4) having traveling performance comparable to that of an internal combustion engine car.

On the other hand, in the power trains as shown in Figs. 7 and 8, since the increasing number of components of the power train is required in comparison with that of Fig. 6, the cost of the system will increase, which presents a new problem. In addition, since the right and left wheels must be separately controlled to achieve the traveling performance with a differential function, the controlling system becomes more complex than that of Fig. 6, and the detection function of faults and protective measures against those faults are needed.

Moreover, since the AC connecting wires, which are provided for connecting the power converters to the motors in Figs. 7 and 8, generate electromagnetic noise. This also poses a new problem accompanying the reduction of the noise.

As described above, the conventional inverter system presents the following problems:

(1) Since bipolar transistors are used as the power semiconductor switching devices, the ON state voltage of the devices in a low current range cannot be reduced below a certain value. As a result, there is a certain limit in reducing the stationary loss in a low output range of the motor operation.
(2) Since the input voltage to the inverter is a main battery voltage, it is fixed. Consequently, reduction of the switching loss in the low output operation mode of the motor operation is also restricted.

In PROCEEDINGS OF THE 30th ANNUAL CONFERENCE OF THE IEEE VEHICULAR TECHNOLOGY SOCIETY, September 1980, Dearborn Michigan, pages 1 to 7, Steven Geppert: "AC propulsion system for an electric vehicle", a power train for an electric vehicle in accordance with the pre-characterizing part of claim 1 is disclosed. The known power train comprises an AC motor which is coupled, via a chain reduction, to a two-speed planetary gear the output of which is connected, via final drive gears, to a differential and axle U-joints.

IEEE TRANSACTIONS OF INDUSTRY APPLICATIONS, Vol. 1A-17, No. 5, September 1981, New York US, pages 518 to 521, Akira et al.: "A new neutral-point-clamped PWM inverter" discloses an inverter wherein a series circuit of two capacitors is connected across the battery. The connection node between the two capacitors is interconnected with tabs of the series connected transistors which serve for controlling the excitation of the U, V and W windings of the AC motor. Thus, a three-level voltage control of the switches can be achieved.

It is an object of the present invention to provide an integral type power train for an electric vehicle, which is small, light, inexpensive, low-noise, and can realize the traveling performance comparable to that of an internal combustion engine car except for the mileage.

In accordance with the present invention, there is provided a power train for an electric vehicle as defined in claim 1.

Here, the power converter may comprise the features mentioned in subclaim 2.

According to the features of subclaim 2, the following advantages can be obtained.

(1) If the first, second, and third levels are determined as $V_0/2$, $V_0$ and 0, where $V_0$ is the battery voltage, the power switching devices having a low withstanding voltage $V_0/2$ can be employed. This makes it possible to reduce the ON state voltage of the power switching devices in comparison with a conventional inverter which requires power switching devices whose withstanding voltage is $V_0$.

(2) Since the power switching devices of the inverter switch a first voltage or the difference voltage of the first and second voltages (both voltages are typically $V_0/2$) lower than that of a conventional inverter ($V_0$), the switching loss of the power switching devices is reduced, and hence, the loss of the inverter is also reduced.

(3) Unipolar switching device will further reduce the stationary loss of the switching devices in a low output power operation mode because the ON state voltage is approximately directly proportional to the current passing through the power switching devices, and hence, the stationary loss is approximately directly proportional to the square of the current.

The above and other objects, effects, features and advantages of the present invention will become more apparent from the following description of the embodiments thereof taken in conjunction with the accompanying drawings.

Fig. 1 is a circuit diagram showing a main circuit of a conventional electric vehicle;

Fig. 2 is a graph illustrating a relationship between the current $i_d$ and the ON state voltage $v_d$ of a bipolar power switching device;

Fig. 3 is a diagram illustrating waveforms at a turn-on operation of a power switching device of an inverter;

Fig. 4 is a diagram illustrating waveforms at a turn-off operation of a power switching device of an inverter;

Fig. 5 is a graph illustrating the relationships between the output power of an induction motor and a motor current, and the output power and a motor voltage;

Fig. 6 is a block diagram showing a power train of a conventional electric vehicle;

Fig. 7 is a block diagram showing another power train of a conventional electric vehicle;

Fig. 8 is a block diagram showing still another power train of a conventional electric vehicle;

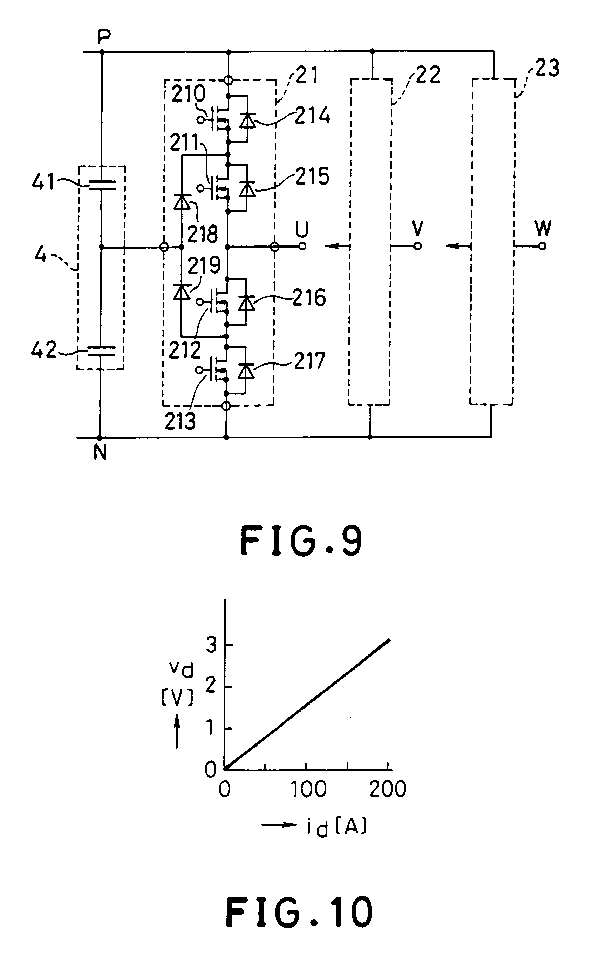

Fig. 9 is a circuit diagram showing an embodiment of an inverter for an electric vehicle;

Fig. 10 is a graph illustrating t-he relationship between the ON state voltage and the current of a power MOSFET;

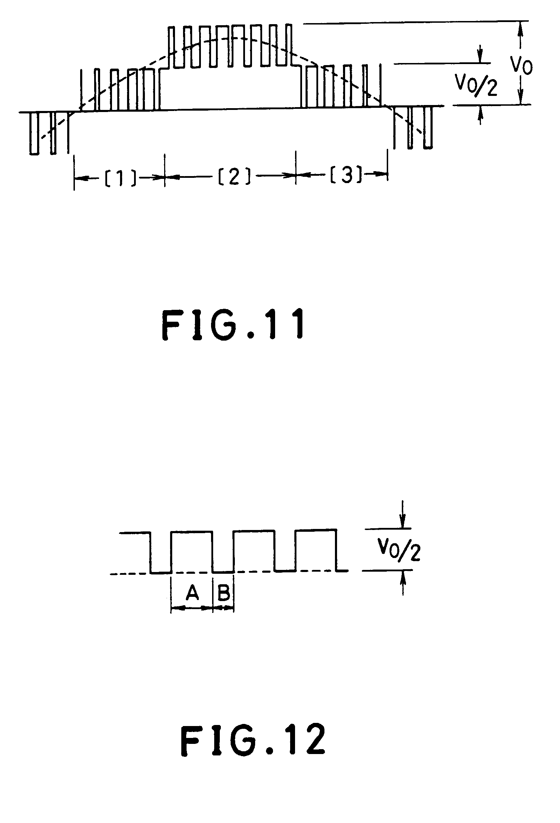

Fig. 11 is a diagram illustrating a waveform of the output voltage of the inverter of Fig. 9 in a high output power operation mode;

Fig. 12 is a diagram illustrating a waveform of the output voltage of the inverter of Fig. 9 in the intervals [1] and [3] of Fig. 11;

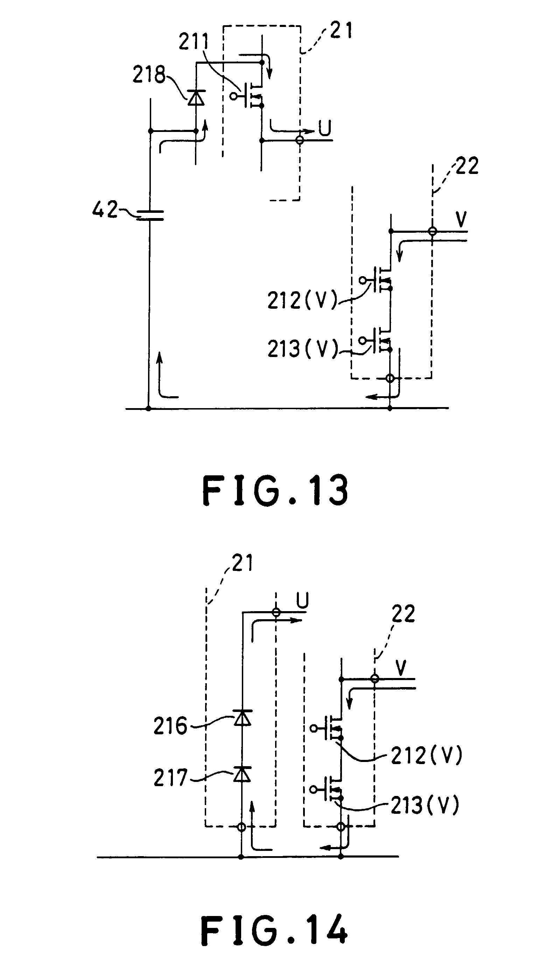

Figs. 13 and 14 are diagrams illustrating the operation of the inverter of Fig. 9 in the intervals [1] and [3];

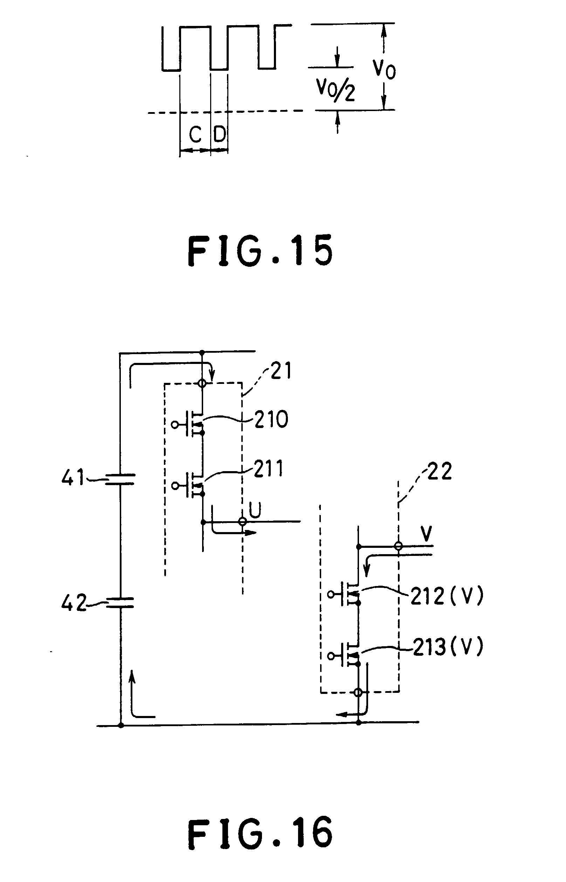

Fig. 15 is a diagram illustrating a waveform of the output voltage of the inverter of Fig. 9 in the interval [2] of Fig. 11;

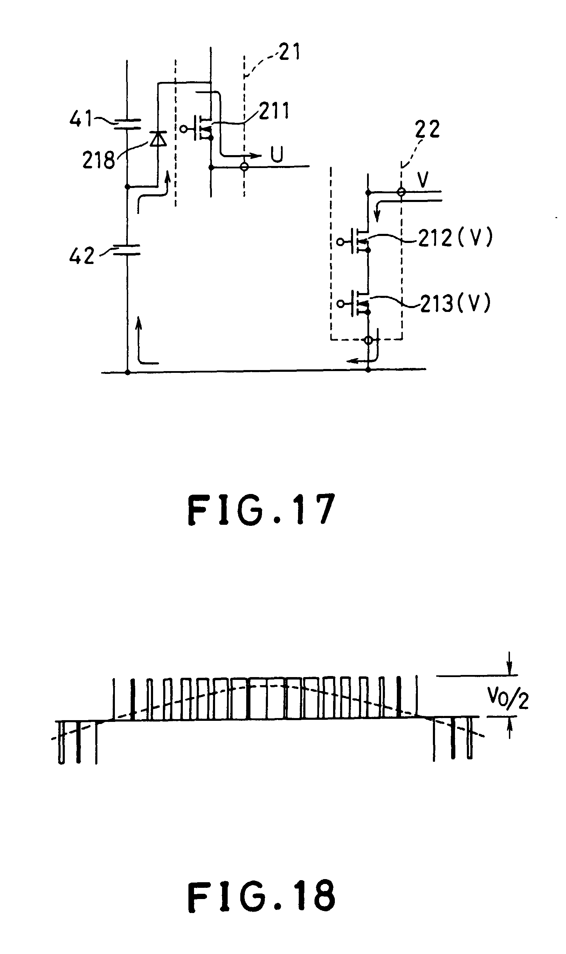

Figs. 16 and 17 are diagrams illustrating the operation of the inverter of Fig. 9 in the interval [2];

Fig. 18 is a diagram illustrating a waveform of the output voltage of the inverter of Fig. 9 in a low output power operation mode;

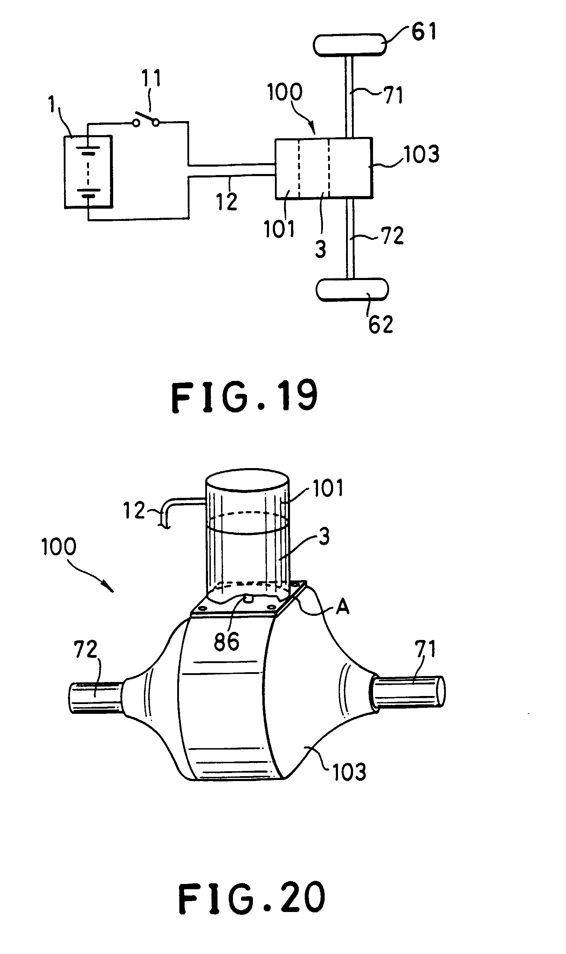

Fig. 19 is a block diagram showing the arrangement of an embodiment of a power train in accordance with the present invention;

Fig. 20 is a perspective view showing the power train of Fig. 19;

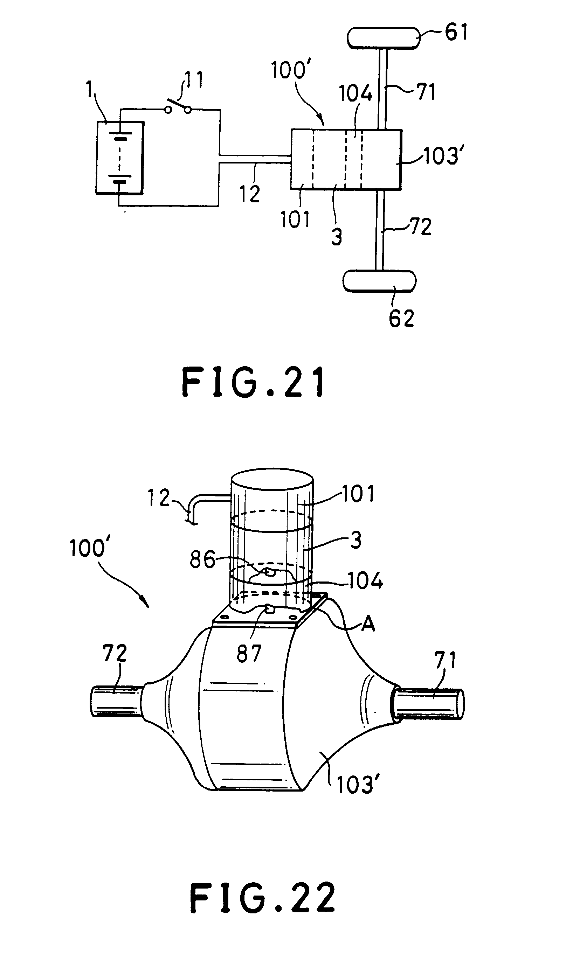

Fig. 21 is a block diagram showing the arrangement of another embodiment of a power train in accordance with the present invention; and

Fig. 22 is a perspective view showing the power train of Fig. 21.

The invention will now be described with reference to the accompanying drawings.

Fig. 9 shows an embodiment of an inverter wherein the contents of the V and W phases of the inverter main circuit is omitted. The arrangement of Fig. 9 corresponds to the inverter 2 and the smoothing capacitor 4 stated before with reference to Fig. 1, and hence, the entire system can be constructed by connecting the main battery 1 and the motor 3 to the arrangement of Fig. 9.

In Fig. 9, two capacitors 41 and 42 connected in series constitute a smoothing capacitor 4 which is substantially the same as the smoothing capacitor 4 in Fig. 1.

Since three inverter arms 21 - 23 have the same construction, only the inverter arm 21 of the U phase is explained here. In the inverter arm 21, four power semiconductor switching devices 210 - 213, which are unipolar power switching devices such as a power MOSFET or the like, are connected in series in the same polarization. An AC output terminal U is provided at the connecting point of the power switching devices 211 and 212 so that the AC output of the U phase is produced from this terminal U. The power switching device 210 is connected to the positive terminal P of the DC source, whereas the power switching device 213 is connected to the negative terminal N thereof.

Current feedback diodes 214 - 217 are connected with the power switching devices 210 - 213 in antiparallel fashion. Diodes 218 and 219 are connected in series as shown in this figure so that the cathode terminal of the diode 218 is connected to the connecting point of the power switching devices 210 and 211, whereas the anode terminal of the diode 219 is connected to the connecting point of the power switching devices 212 and 213. The connecting point of the diodes 218 and 219 are connected to the connecting point of the capacitors 41 and 42.

Next, the operation of this embodiment will be described.

First, Fig. 10 illustrates a voltage-current characteristics of the power MOSFET used as the power switching devices 210 - 213, which exhibits approximately resistive characteristics.

Figs. 11 - 18 illustrate the operation of this embodiment. Fig. 11 shows an output voltage waveform (the line-to-line voltage waveform) of the inverter during a high power output (or a high and middle power output). In this figure, the dotted line indicate the waveform of the fundamental voltage of the motor. To obtain the fundamental voltage, the following control is achieved: during the intervals [1] and [3] in the half cycle, the output voltage of the inverter is produced in the form of PWM pulses whose height is half the main battery voltage $V_0/2$ and whose base level is zero Volt; on the other hand, during the middle interval [2] in the half cycle, the output voltage is produced in the form of PWM pulses whose height is half the main battery voltage $V_0/2$ and whose base level is half the main battery voltage $V_0/2$. In other words, the inverter operates as a three-level inverter.

Figs. 12 - 14 illustrate the operation to obtain the PWM pulses during the intervals [1] and [3].

Fig. 12 illustrates the waveform of the output voltage (the line-to-line voltage) of the inverter wherein A designates the interval during which half the main battery voltage $V_0/2$ is outputted, and B denotes the interval during which the voltage is zero.

Fig. 13 illustrates the operation of the power switching devices of the U - V phases during the interval A of Fig. 12. In Fig. 13, reference numeral 212(V) designates the power switching device in the V-phase, which is the counterpart of the power switching device 212 in the U-phase, and reference numeral 213(V) designates the power switching device in the V-phase, which is the counterpart of the power switching device 213 in the U-phase.

During the interval A of Fig. 12, the power switching devices 211, 212(V) and 213(V) are closed. By this, the voltage across the capacitor 42 (that is, $V_0/2$) is added between the output terminals U-V via the diode 218. In this state, it is assumed that the current is flowing in the direction indicated by the arrows in Fig. 13. Subsequently, when the power switching device 211 is opened, a new current passage will be established as shown in Fig. 14. The passage passes through the output terminal V, the power switching device 212(V), the power switching device 213(V), the diode 217, the diode 216 and the output terminal U so that the voltage between the output terminals U-V becomes zero as in the interval B of Fig. 12.

Next, the operation during the interval [2] of Fig. 11 will be described with reference to Figs. 15 - 17.

Fig. 15 illustrates the waveform of the output voltage of the inverter (line-to-line voltage), wherein C designates the interval during which the main battery voltage $V_0$ is outputted, and D denotes the interval during which half the main battery voltage $V_0/2$ is outputted.

Fig. 16 illustrates the operation of the power switching devices during the interval C in a manner similar to Fig. 13 wherein the operation during the interval A is illustrated. During the interval C, the power switching devices 210, 211, 212(V) and 213(V) are all closed so that the voltage across the two capacitors 41 and 42 (that is, $V_0$) is applied between the output terminals U-V. In this state, it is assumed that the current is flowing as indicated by the arrows of Fig. 16. Subsequently, when the power switching device 210 is opened, a new current passage is established as shown in Fig. 17: the current flows through the capacitor 42, the diode 218, the power switching device 211, and the output terminal U so that the voltage across the capacitor 42 (that is, $V_0/2$) is applied between the output terminals U and V via the diode 218.

Fig. 18 illustrates the waveform of the output voltage (line-to-line voltage) of the inverter when the motor is operated in a low output operation mode. The voltage waveform is a PWM waveform whose height is $V_0/2$ and whose base level is zero. In this case, since the operation of the power switching devices of the inverter is similar to that of the intervals [1] and [3] of Fig. 11, the explanation thereof is omitted here.

The dotted line shown in Fig. 18 shows a fundamental waveform of the voltage of the motor whose peak value $V_Mm$ is expressed by the following Equation 3.

$$V_{Mm} = V_0 / (2 \sqrt{2}) \qquad (3)$$

The output voltage of the inverter can take a waveform as shown in Fig. 18 in a range where the motor voltage is smaller than the peak voltage $V_Mm$.

Although it is supposed that the motor driven by the inverter is an induction motor in this embodiment, a synchronous motor can also be applied to the present invention.

Furthermore, the present invention can be applied not only to three-phase inverters but also to multi-phase inverters.

Next, preferred examples of the power train in accordance with the present invention will be described below.

Fig. 19 is a first example of a power train which integrates a semiconductor power converter, a motor and a differential gear into a unit. Here, the semiconductor power converter comprises an inverter as described above, and the differential gear is provided with a reduction function. Driving of wheels is accomplished by driving the motor by the power converter, and by transmitting the power of the motor to the right and left wheels via the differential gear having the reduction function.

More specifically, in Fig. 19, a driving unit 100 integrally incorporating the power train comprises a power converter 101, a motor 3 and a differential gear 103 having a reduction function.

The motor 3 is an AC motor whose output shaft is joined to the input shaft of the differential gear 103. The power converter 101 comprises the inverter described above. The inverter incorporates its controller.

The power converter 101 is connected to the motor 3 by directly connecting their terminals with each other, or by connecting the terminals with shortest wires in the driving unit 100.

The differential gear 103 is similar to a differential gear employed by a conventional electric vehicle except that the differential gear 103 has a greater reduction gear ratio than the conventional one so that it is provided with a reduction function. The output shaft of the differential gear 103 is joined to the right and left wheels 61 and 62 via the wheel axles 71 and 72 so that they drive the wheels 61 and 62.

Fig. 20 is a perspective view of the driving unit 100. A portion of a casing of the differential gear 103 is made a mounting portion A on which a unit integrally incorporating the power converter 101 and the motor 3 in a frame made of metal is mounted. Thus, the integral structure comprising the power converter 101, the motor 3 and the differential gear 103 constitutes the driving unit 100. The output shaft 86 of the motor 3 is joined to the input shaft of the differential gear 103 inside the casing.

Fig. 21 is a second example of the power train in accordance with the present invention, which comprises a reduction gear 104 in the driving unit in the case where the reduction gear ratio of the reduction gear 103 in the power train of Fig. 19 is insufficient.

In other words, the power train of Fig. 21 comprises a semiconductor power converter including the inverter described above a motor, a reduction gear, and a differential gear, which are constructed into an integral structure.

More specifically, as shown in Fig. 22, the power converter 101, the motor 3 and the reduction gear 104 are integrally mounted on the mounting portion A provided on a part of a casing of a differential gear 103'. All these components are arranged into an integral structure to constitute a driving unit 100' as shown in Fig. 22. Here, the output shaft of the motor 3 is joined to the input shaft of the reduction gear 104 inside the casing. Likewise, the output shaft 87 of the reduction gear 104 is joined to the input shaft of the differential gear 103' inside the casing.

The power trains as shown in Figs. 19 and 22 are formed as a driving unit which incorporates the power train of an electric vehicle into an integral structure. Thus, a small, light, low cost power train can be implemented.

In addition, since the power converter like an inverter, and the motor are integrated, they can share a cooling device so that the cooling system can be simplified, thereby resulting in further reduction in cost and the improvement in efficiency. Further, since the wires connecting the power converter to the motor as the AC connecting wires can be obviated or made shortest, electromagnetic faults caused by noise generated by the connecting wires are remarkably reduced.

Moreover, since the electric leads pulled out of the casing consist of only DC connecting wires, and all the components of the driving unit can be covered by the casing made of metal, the electromagnetic faults caused by these components will be greatly reduced.

In addition, the power train, the power converter and the motor control system can be simplified in comparison with the conventional systems as shown in Figs. 7 and 8 wherein each wheel is separately driven because all the power trains of the present invention comprise the differential gear. Moreover, a steering performance similar to that of an internal combustion engine car can be obtained.

## Claims

1. A power train for an electric vehicle which drives wheels (61, 62) of said electric vehicle using power supplied from a battery (1), said power train comprising:

   a power converter (101) converting a DC voltage supplied from said battery (1) to an AC voltage;
   a motor (3) driven by said AC voltage; and
   a differential gear (103; 103') connected to the output shaft (86) of said motor,

characterized in that said differential gear has a reduction gear function;

said power converter (101), said motor (3) and said differential gear (103; 103') are integrally arranged into a unit, said differential gear (103; 103') is provided with a mounting portion (A) on which a unit integrally incorporating the power converter (101) and the motor (3) is mounted, and the output shaft (86) of motor (3) is either joined to the input shaft of the differential gear (103), or, if provided, to the input shaft of a reduction gear (104) arranged in the unit, the output shaft of the reduction gear (104), if provided, being joined to the input shaft of the differential gear (103').

2. A power train for an electric vehicle as claimed in claim 1, characterized in that said power converter comprises:

dividing means (41, 42) for dividing the DC voltage outputting from said battery (1) into a first DC voltage and a second DC voltage which is higher than the first DC voltage; first switching means (212, 213) for switching said first DC voltage to produce a first pulse train, said first pulse train having a pulse height equal to said first DC voltage and a base level equal to a third DC voltage lower than said second DC voltage; second switching means (210, 211) for switching said second DC voltage to produce a second pulse train, said second pulse train having a pulse height equal to a difference between said second DC voltage and said first DC voltage and a base level equal to said first DC voltage; and control means for controlling switching of said first switching mean and said second switching means.

**Patentansprüche**

1. Kraftübertragung für ein Elektrofahrzeug, bei dem Räder (61, 62) des Elektrofahrzeugs mit Hilfe einer von einer Batterie (1) zugeführten Spannung angetrieben werden, wobei die Kraftübertragung enthält:

einen Spannungswandler (101), der eine von der Batterie (1) zugeführte Gleichspannung in eine Wechselspannung umwandelt, einen Motor (3), der durch die Wechselspannung angetrieben wird, und

ein Differentialgetriebe (103; 103'), das mit der Ausgangswelle (86) des Motors verbunden ist,

dadurch **gekennzeichnet,** daß

das Differentialgetriebe eine Untersetzungsgetriebefunktion aufweist, der Spannungswandler (101), der Motor (3) und das Differentialgetriebe (103; 103') integral in einer Einheit angeordnet sind, das Differentialgetriebe (103; 103') mit einem Montageabschnitt (A) versehen ist, an dem eine Einheit angebracht ist, die den Spannungswandler (101) und den Motor (3) integral enthält, und die Ausgangswelle (86) des Motors (3) entweder mit der Eingangswelle des Differentialgetriebes (103), oder, falls vorhanden, mit der Eingangswelle eines in der Einheit angeordneten Untersetzungsgetriebes (104) verbunden ist, wobei die Ausgangswelle des Untersetzungsgetriebes (104), falls vorhanden, mit der Eingangswelle des Differentialgetriebes (103') gekoppelt ist.

2. Kraftübertragung für ein Elektrofahrzeug nach Anspruch 1, dadurch **gekennzeichnet,** daß der Spannungswandler aufweist:

eine Teilereinrichtung (41, 42) zum Unterteilen der Gleichspannung, die von der Batterie (1) erzeugt wird, in eine erste Gleichspannung und eine zweite Gleichspannung, die höher ist als die erste Gleichspannung, eine erste Schalteinrichtung (212, 213) zum Schalten der ersten Gleichspannung derart, daß ein erster Impulszug erzeugt wird, der eine Impulshöhe, die gleich groß ist wie die erste Gleichspannung, und einen Basispegel aufweist, der gleich groß wie eine dritte Gleichspannung ist, die niedriger ist als die zweite Gleichspannung, eine zweite Schalteinrichtung (210, 211) zum Schalten der zweiten Gleichspannung zur Erzeugung eines zweiten Impulszuges, der eine Impulshöhe, die gleich groß ist wie der Unterschied zwischen der zweiten Gleichspannung und der ersten Gleichspannung, und einen Basispegel aufweist, der gleich groß ist wie die erste Gleichspannung, und eine Steuereinrichtung zum Steuern des Schaltens der ersten Schalteinrichtung und der zweiten Schalteinrichtung.

**Revendications**

1. Chaîne motrice pour un véhicule électrique qui entraîne des roues (61, 62) de ce véhicule électrique en utilisant de l'énergie qui est fournie par une batterie (1), cette chaîne motrice comprenant :

un convertisseur de puissance (101) qui convertit une tension continue fournie par la batterie (1) en une tension alternative;
un moteur (3) entraîné par la tension alternative; et
un différentiel (103; 103') accouplé à l'arbre de sortie (86) du moteur,

caractérisée en ce que le différentiel a une fonction de train d'engrenages réducteur,

le convertisseur de puissance (101), le moteur (3) et le différentiel (103; 103') sont incorporés de façon intégrée en une seule unité,
le différentiel (103; 103') comporte une partie de montage (A) sur laquelle est montée une unité dans laquelle le convertisseur de puissance (101) et le moteur (3) sont incorporés de façon intégrée, et
l'arbre de sortie (86) du moteur (3) est soit accouplé à l'arbre d'entrée du différentiel (103), soit, s'il existe, à l'arbre d'entrée d'un train d'engrenages réducteur (104) incorporé dans l'unité, l'arbre de sortie du train d'engrenages réducteur (104), s'il existe, étant accouplé à l'arbre d'entrée du différentiel (103').

2. Chaîne motrice pour un véhicule électrique selon la revendication 1, caractérisée en ce que le convertisseur de puissance comprend :

des moyens de division (41, 42) pour diviser la tension continue de sortie de la batterie (1) en une première tension continue et une seconde tension continue qui est supérieure à la première tension continue;
des premiers moyens de commutation (212, 213) pour commuter la première tension continue de façon à produire un premier train d'impulsions, ce premier train d'impulsions ayant une hauteur d'impulsions égale à la première tension continue et un niveau de base égal à une troisième tension continue inférieure à la seconde tension continue;
des seconds moyens de commutation (210, 211) pour commuter la seconde tension continue de façon à produire un second train d'impulsions, ce second train d'impulsions ayant une hauteur d'impulsions égale à une différence entre la seconde tension continue et la première tension continue, et un niveau de base égal à la première tension continue; et
des moyens de commande pour commander la commutation des premiers moyens de commutation et des seconds moyens de commutation.

FIG.1

FIG.2

FIG.3

FIG.4

FIG.5

FIG.6

FIG.7

FIG.8

FIG.9

FIG.10

FIG.11

FIG.12

FIG.13

FIG.14

# FIG.15

# FIG.16

FIG.17

FIG.18

# FIG.19

# FIG.20

# FIG.21

# FIG.22